# EUROPEAN PATENT APPLICATION

(11) **EP 4 357 968 A1**
(43) Date of publication of application: **24.04.2024**
(21) Application number: 22825422.3
(22) Date of filing: 31.03.2022
(51) Int. Cl.: G06K 19/04

(54) **CONTACTLESS SMART CARD IN THE FORM OF A RING**

(30) Priority: 16.06.2021 RU 2021117422
(71) Applicant: Vega Pay Information Technology Network Services L.L.C, Al Sufouh (AE)
(72) Inventor: GAZIN, Aleksei Vladimirovich, Moscow, 107241 (RU); TIMOFEEVA, Elena Aleksandrovna, obl., Ruzskiy r-n, p. Tuchkovo, 143130 (RU)
(74) Representative: Sanz-Bermell Martinez, Alejandro
(86) International application number: PCT/RU2022/050108
(87) International publication number: WO 2022/265535

(57) **Abstract**

The invention relates to smart cards in the form of rings, operating on the basis of near-field communication (NFC) technology. The claimed article comprises a loop antenna connected to an NFC microchip on an electrically conductive support, and a single-piece housing having on the side adjacent the wearer's finger a rectangular recess with a height of not more than 5.0 mm and a depth of not more than 1.5 mm for receiving the antenna and the microchip, said recess being hermetically sealed across its height, and the thickness of the protrusions of the housing above the recess being from 1.0 to 1.5 mm. The result is that of reducing the weight and size of a ring having a single-piece housing and a recess on its inner side, while maintaining the performance of the components of the ring and the level of protection of said components against external mechanical effects.

## Description

The invention relates to ring-shaped smart cards operated using Near Field Communication (NFC) wireless data transmission technology. These smart cards can be used for contactless payments, as tickets for public transport or mass events, for authentication, data exchange, etc.

Contactless smart cards allow the bank account holder to conduct transactions by exchanging information between a contactless payment device and a reader via a radio-frequency channel. The resonance circuit of smart cards usually includes an antenna, a condenser and a microchip connected between each other.

The state of art provides a contactless ring-shaped smart card (CN 203930905 U, 05.11.2014) comprising an arc-shaped printed circuit that accommodates a frame antenna and an NFC-microchip connected thereto as well as a combined body comprising the following elements: primary element with a cutout for inserting a printed circuit on the surface oriented in the opposite direction from the user finger, a screening layer closing the cutout, and an external protective layer. Drawbacks of this solution include a complex and unreliable design. Several body elements make it massive and unstable to loading since the exterior is often subject to mechanical effects including impacts, which may result in lamination of body parts, damages of the printed circuit and failure of the payment device.

A contactless ring-shaped smart card (WO 2018020055 A1, 01.02.2018) is selected as a prototype, comprising an integral body and an interconnected frame antenna, a condenser for more accurate configuration and a microchip on the current-conducing pad supporting NFC technology. An integral body on the internal side intended for finger touching provides a cutout shaped as a truncated cone and intended to accommodate the antenna, condenser and microchip. The cutout cone is directed inwards the body and has the bottom height of 8 mm, with the ring total length of 9 mm, so there is 0.5 mm on the internal side of the ring allocated for body protrusions on each side of the cutout, which is then sealed along the entire height. Such smart card ensures a higher protection of circuit components, but thin edges of body protrusions on the inner side up to the cutout make it insufficiently strong. Ring drawbacks are massiveness since the body is rather wide because of the cutout; and complexity of production since the cone shape of the cutout requires a special approach in manufacturing and installation of a condenser that is necessary for a more accurate configuration of the smart-card operation.

The invention is intended to create a contactless ring-shaped smart card comprising a cutout on the inner side oriented towards the user finger and having the least number of elements, lower massiveness, simplified design, increased operational and production reliability while keeping all advantages achieved by the prototype.

The technical result lies in decreased weight and dimensions of the ring with an integral body and a cutout on the inner side while keeping the performance of the smart-card resonance circuit and protecting its components from external mechanical effects.

This result is achieved by having a ring-shaped smart card comprising an interconnected frame antenna with a microchip on the current-conducting pad supporting NFC technology and an integral body that has a cutout on the side intended for finger touching, the said cutout comprises an antenna with a microchip and is sealed along its height and is rectangular with the height of no more than 5.0 mm and depth of no more than 1.5 mm, while the height of body protrusions above the cutout is 1.0 to 1.5 mm.

The microchip has electrical capacity of at least 78 pF.

The rectangular cutout with the height above 5.0 mm and depth below 1.5 mm, with the total body height below 8 mm, helps reducing the ring weight and dimensions while keeping and even improving the protection of resonance circuit elements (microchip with frame antenna) against external mechanical effects. The protection is affected by not only thicker protrusions of the body above the cutout, but also a reduced number of parts that may fail, by means of excluding the condenser and using the microchip with electrical capacity that ensures the smart card performance. The rectangular cutout also ensures simplified design since such cutout is made faster, with lower defect probability and is sealed easier that the cone-shaped cutout, and it ensures correct positioning of the microchip with the antenna.

The invention is explained using Figs. 1-3.
Fig. 1 schematically shows the interconnected microchip and frame antenna.
Fig. 2 shows the body with the cutout.
Fig. 3 shows the body in sectional view.

A contactless ring-shaped smart card can be used for contactless payments, when using public transport or visiting mass events, authentication, data exchange, etc.

The device contains interconnected solid-state microchip 1 on the current-conducting pad 2 and frame antenna 3 whose contacts are connected with the contacts of microchip 1 as well as integral body 4.

Microchip 1 supports NFC technology and has electrical capacity ensuring the smart card performance, being at least 78 pF. This capacity is obtained when testing microchips with different capacities. Smart-card performance means performance of its resonance circuit, namely, capability of stable interaction with the reader.

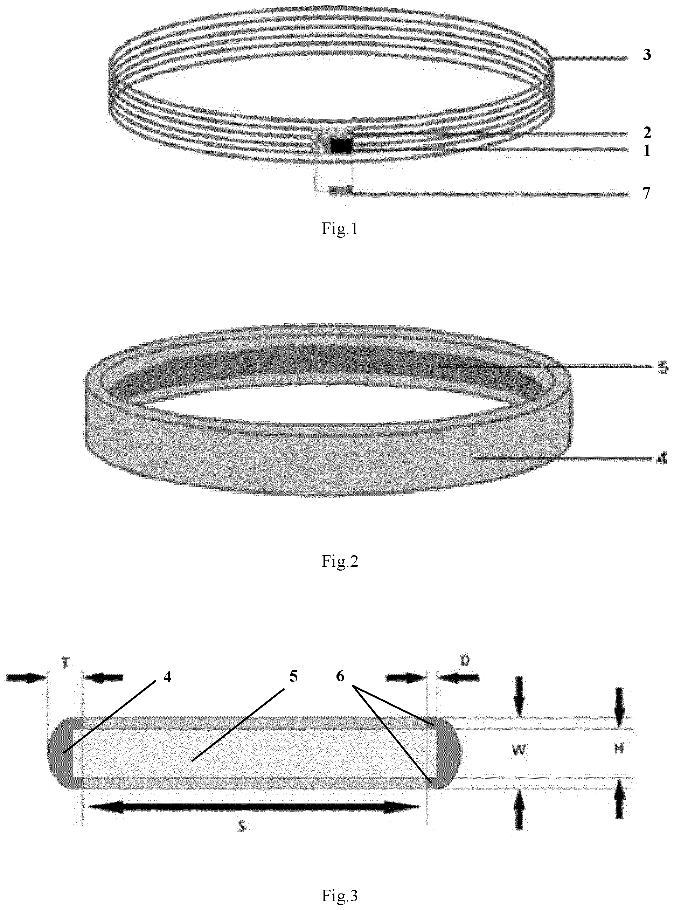

Body 4 is equipped with rectangular cutout 5 on the inner side intended for finger touching and comprising microchip 1 with frame antenna 3 that has length L from 310 to 490 mm and fits such number of turns that ensures stable resonance frequency of the oscillatory circuit. Cutout 5 represents a furrow or a recession made along the entire circumference of the internal ring side (Figs. 1, 3) and height *H* not more than 5.0 mm and usually not less than 2.0 mm, and depth *D* usually from 1.2 to 1.5 mm. Cutout 5 is sealed along its height flush with the body protrusions so that the inner side of the ring is smooth. The sealant represents a coating made of ceramics, plastic, bi-component epoxy pigmented compounds (epoxy resins) or composites based on ceramic matrix.

Height *W* of body 4 is 4.0 to 8.0 mm, total length *T* is 2.0 mm to 2.8 mm, the thickness of protrusions 6 above the cutout is 1.0 to 1.5 mm and ring size *S* is 15 to 25 (Fig. 3). Body 4 can be made of ceramics, plastics, epoxy resins or composite materials.

These parameters allow for decreasing the weight and dimensions of the ring while keeping the performance of the smart card resonance circuit and protection of its components against mechanical effects.

Optionally, the body can have a hole for LED 7 to indicate smart card getting within the reader coverage, which can be represented by a smartphone with NFC technology, a payment terminal, a turn gate or a lock with contactless activation or other devices.

The contactless ring-shaped smart card operates as follows.

Based on the existing input data, size *S* of ring body 4 is 15 to 25 mm, height *H* of rectangular cutout 5 is 2.0 to 5.0 mm, depth *D* is 1.2 to 1.5 mm, the said ring body made for the selected NFC microchip on the current-conducting pad 2 with the capacity of 78 pF and body protrusions thickness above the cutout of 1.0 to 1.5 mm. The height of antenna 3 is 310 to 490 mm, the said height fits a certain number of turns to ensure stable frequency of the resonance circuit, and the antenna is connected to contacts of microchip 1. The connected components (Fig. 1) are placed into the rectangular cutout 5 (Figs. 2-3) that is sealed flush with the inner side surface of body 4. Since there is no need to install the condenser and make a cutout of complex shape, the production becomes faster and less expensive.

In case of using the smart card for payment, microchip 1 is recorded with personal payment details of the users and the emitting bank payment application that interacts with the seller's acquirer bank via the payment system during the payment transaction. Data is encrypted by authentication keys and protected against re-writing or modification.

The finished ring with encrypted data is put on user's finger so that the inner smooth side of the ring comprised of protrusions 6 and sealant of cutout 5 abut the finger. When the ring is within the coverage zone of the reader, the resonance circuit formed by frame antenna 3 together with microchip 1 having capacity characteristics ensures transmission of encrypted information via a radio-frequency channel to at least 2 cm.

In case of active motions and mechanical effects in the form of possible impacts against body 4 and its faces including cutouts 6, the circuit components are not damaged and remain operable thanks to fewer parts and thicker body walls with reduced overall dimensions. Using a special capsule filler to seal the inner side of the ring may ensure water-rightness, which makes hydrotherapeutic procedure possible without smart card losing its operability.

Below are embodiments of the invention.

### 1. Cutout height H = 2.0 mm and depth D = 1.2 mm.

When using the microchip on the current-conducting pad with the capacity of 78 pF with dimensions 1.9x4.0 mm and the antenna 0.08 mm thick, the body dimensions are chosen as follows: height *W=* 4.0 mm, thickness *T* = 2.0 mm, cutout *H* = 2.0 mm, depth *D* = 1.2 mm. The thickness of body protrusions above the cutout is 1.0 mm. To obtain a stable frequency of the resonance circuit, for example, for a ring size S = 20 mm, the antenna with length L = 435 mm is fitted into 6 turns.

### 2. Cutout height H = 4.0 mm and depth D = 1.37 mm.

When using the microchip on the current-conducting pad with the capacity of 78 pF with dimensions 3.0×4.0 mm and the antenna 0.2 mm thick, the body dimensions are chosen as follows: height *W* = 6.0 mm, thickness *T* = 2.5 mm, cutout *H* = 4.0 mm, depth *D* = 1.37 mm. The thickness of body protrusions above the cutout is 1.0 mm. To obtain a stable frequency of the resonance circuit, for example, for a ring size S = 20 mm, the antenna with length L = 435 mm is fitted into 6 turns.

### 3. Cutout height H = 5.0 mm and depth D = 1.5 mm.

When using the microchip on the current-conducting pad with the capacity of 78 pF with dimensions 3.0×4.0 mm and the antenna 0.3 mm thick, the body dimensions are chosen as follows: height *W* = 8.0 mm, thickness *T* = 2.8 mm, cutout *H* = 5.0 mm, depth *D* = 1.5 mm. This body thickness is selected to ensure stability against mechanical effects when making a hole for the LED. The thickness of body protrusions above the cutout is 1.5 mm. To obtain a stable frequency of the resonance circuit, for example, for a ring size S = 20 mm, the antenna with length L = 350 mm is fitted into 5 turns.

In all cases, the cutout is sealed with a bi-component epoxy compound.

Testing several rings made with the proposed body has confirmed smart card operability and protection of its components against external mechanical effects while reducing weight and dimensions.

In this manner, the invention achieves the claimed technical result.

## Claims

1. Ring-shaped smart card comprising an interconnected frame antenna with a microchip on the current-conducting pad supporting NFC technology and an integral body that has a cutout on the side intended for finger touching, the said cutout comprises an antenna with a microchip and is sealed along its height **characterized in that** the cutout is rectangular with the height of no more than 5.0 mm and depth of no more than 1.5 mm, while the height of body protrusions above the cutout is 1.0 to 1.5 mm.

2. Smart card according to claims 1 or 2 **characterized in that** the microchip has electrical capacity of at least 78 pF.

## Amended claims

### Amended claims under Art. 19.1 PCT

1. Ring-shaped smart card comprising an interconnected frame antenna with a microchip on the current-conducting pad supporting NFC technology and an integral body that has a cutout on the side intended for finger touching, the said cutout comprises an antenna with a microchip and is sealed along its height **characterized in that** the cutout is rectangular with the height of no more than 5.0 mm and depth of no more than 1.5 mm, while the height of body protrusions above the cutout is 1.0 to 1.5 mm.

2. Smart card according to claim 1 **characterized in that** the microchip has electrical capacity of at least 78 pF.
